# EUROPÄISCHE PATENTSCHRIFT

(11) **EP 2 419 309 B1**
(45) Veröffentlichungstag und Bekanntmachung des Hinweises auf die Patenterteilung: **19.06.2013**
(21) Anmeldenummer: 10715697.8
(22) Anmeldetag: 16.04.2010
(51) Int. Cl.: B60T 8/1769, B60T 8/32, B60K 23/08

(54) **VERFAHREN ZUR STEUERUNG EINES FAHRZEUGS MIT LEDIGLICH GEBREMSTER HINTERACHSE UND BREMSSCHLUPFREGELUNG**
METHOD OF CONTROLLING A VEHICLE WHERE ONLY THE REAR AXLE IS BRAKED AND BRAKE SLIP CONTROLLER
PROCÉDÉ DE CONTRÔLE D'UN VÉHICULE DONT SEUL L'ESSIEU ARRIÈRE EST FREINÉ ET CONTRÔLEUTR DE GLISSEMENT DE FREINAGE

(30) Priorität: 17.04.2009 DE 102009017577
(43) Veröffentlichungstag der Anmeldung: 22.02.2012
(73) Patentinhaber: KNORR-BREMSE Systeme für Nutzfahrzeuge GmbH, 80809 München (DE)
(72) Erfinder: MEDERER, Martin, 92318 Neumarkt (DE); WIMMER, Andreas, 85368 Moosburg (DE)
(74) Vertreter: Schönmann, Kurt
(86) Internationale Anmeldenummer: PCT/EP2010/002338
(87) Internationale Veröffentlichungsnummer: WO 2010/118877

(56) Entgegenhaltungen:
- EP-A1- 0 112 421
- EP-A1- 0 457 742
- DE-A1- 3 637 596
- US-A- 5 248 020

## Beschreibung

### Stand der Technik

Die Erfindung geht aus von einem Verfahren zur Steuerung eines Fahrzeugs mit einer druckmittelbetätigten Bremseinrichtung, welche Radbremsen und seitenweise Bremskreise an lediglich wenigstens einer Hinterachse umfasst, sowie mit einer Antriebsmaschine, welche die Hinterräder der wenigstens einen Hinterachse antreibt, wobei die Hinterräder zur Übertragung von Antriebs- und/oder Bremsleistung mit Vorderrädern einer Vorderachse wahlweise oder automatisch koppelbar oder von diesen entkoppelbar sind, gemäß dem Oberbegriff von Anspruch 1.

Weiterhin geht die Erfindung aus von einem Fahrzeug mit einer Bremseinrichtung, welche Radbremsen und seitenweise Bremskreise an lediglich wenigstens einer Hinterachse umfasst, sowie mit einer Antriebsmaschine, welche die Hinterräder der wenigstens einen Hinterachse antreibt, wobei die Hinterräder zur Übertragung von Antriebs- und/oder Bremsleistung mit Vorderrädern einer Vorderachse wahlweise oder automatisch koppelbar oder von diesen entkoppelbar sind, gemäß dem Oberbegriff von Anspruch 3.

Solche Fahrzeuge sind hauptsächlich landwirtschaftliche Nutzfahrzeuge oder auch Baufahrzeuge mit nicht durch Radbremsen, sondern durch die Kopplung mit den über Radbremsen gebremsten Hinterrädern mitgebremsten Vorderrädern. Die Kopplung zwischen den Vorderrädern und den Hinterrädern erfolgt dabei meist über eine von Hand wahlweise oder sich nur beim Bremsen automatisch schließende Kupplung, welche die von der Antriebsmaschine angetriebene Hinterachse mit einer Gelenkwelle koppelt, welche dann Antriebsleistung bzw. Bremsleistung an die Räder der Vorderachse leitet.

In der DE 602 16 661 T2 werden landwirtschaftliche Nutzfahrzeuge mit einer bremsschlupfgeregelten Bremseinrichtung einer höheren Ausbaustufe beschrieben, welche zusätzlich zu mit Radbremsen versehenen Hinterrädern auch mit Radbremsen versehene Vorderräder aufweisen. In der Schrift werden 4S/4M-Konfigurationen bzw. 4S/3M-Konfigurationen beschrieben, bei denen die Räder der Vorderachse und die Räder der Hinterachse mit jeweils einem Raddrehzahlsensor, die Hinterachse mit einem 2-kanaligen Bremsmodulator und die Vorderachse mit einem 2-kanaligen bzw. 1-kanaligen Bremsmodulator versehen ist.

Solche Konfigurationen von schlupfgeregelten Bremseinrichtungen sind jedoch nicht für gattungsgemäße Fahrzeuge, wie z.B bekannt US-A-5 248 020, wie landwirtschaftliche Nutzfahrzeuge (Traktoren oder Ackerschlepper) oder Baufahrzeuge tauglich, welche nur an der Hinterachse oder den Hinterachsen, aber nicht an der Vorderachse über Radbremsen verfügen. Da jedoch auch solche Fahrzeuge heutzutage immer höhere Geschwindigkeiten erreichen, sind beim Bremsen eine hohe Stabilität sowie möglichst kurze Bremswege wünschenswert.

Der vorliegenden Erfindung liegt deshalb die Aufgabe zugrunde, ein Verfahren zur Steuerung eines Fahrzeugs sowie ein Fahrzeug der eingangs beschriebenen Art derart weiter zu entwickeln, dass beim Bremsen eine hohe Stabilität sowie möglichst kurze Bremswege erzielt werden.

Diese Aufgabe wird erfindungsgemäß durch die Merkmale von Anspruch 1 und von Anspruch 3 gelöst.

### Offenbarung der Erfindung

Das erfindungsgemäße Verfahren schlägt vor, dass die Bremseinrichtung des Fahrzeugs bremsschlupfgeregelt wird, wobei
a) falls die Vorderräder von den Hinterrädern entkoppelt sind, der Bremsschlupf an den Radbremsen der Hinterachse seitenweise individuell geregelt wird,
b) falls die Vorderräder mit den Hinterrädern gekoppelt sind und

α) falls an wenigstens einem Vorderrad kein von einem zugelassenen Bremsschlupf oder von einem zugelassenen Bremsschlupfbereich abweichender Bremsschlupf detektiert wird, der Bremsschlupf an den Radbremsen der Hinterachse seitenweise individuell geregelt wird, oder
β) falls an allen Vorderrädern ein von einem zugelassenen Bremsschlupf oder von einem zugelassenen Bremsschlupfbereich abweichender Bremsschlupf detektiert wird, der Bremsschlupf an wenigstens einem Rad der Hinterachse so geregelt wird, dass wenigstens ein Vorderrad mit dem zugelassenen Bremsschlupf oder mit einem Bremsschlupf innerhalb des zugelassenen Bremsschlupfbereichs gebremst wird.

Mit dieser ABS-Regelstrategie wird es möglich, auch Fahrzeuge ohne Radbremsen an der Vorderachse mit einer ABS-Bremseinrichtung bzw. mit einer Bremsschlupfregelung zu versehen. Insbesondere hat die Erfindung den Vorteil, dass bei Kopplung der Vorderräder mit den Hinterrädern auch die Vorderräder bremsschlupfgeregelt abgebremst und dadurch gegenüber dem Stand der Technik beim Bremsen eine höhere Stabilität an der Vorderachse sowie kürzere Bremswege erzielt werden.

Die Erfindung bezieht sich daher auch auf ein gattungsgemäßes Fahrzeug, dessen Bremseinrichtung auf die oben beschriebene Weise bremsschlupfgeregelt wird und ein Antiblockiersystem beinhaltet, welches den Bremsschlupf an den Radbremsen der Hinterachse auf einen optimalen Bremsschlupf einregelt. Die Bremseinrichtung ist dabei zweikreisig ausgebildet, mit seitenweisen Bremskreisen an der wenigstens einen Hinterachse. Seitenweise Bremskreise bedeutet im Zusammenhang mit der Hinterachse, dass für das Rad der linken Seite bzw. das Rad der rechten Seite jeweils ein separater Bremskreis vorhanden ist. Dadurch ergibt sich eine Sicherheitsreserve bei Ausfall eines Bremskreises.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Ausführungsform des Verfahrens wird im Fall a) die Referenzgeschwindigkeit des Nutzfahrzeugs durch die Signale der den Vorderrädern zugeordneten Raddrehzahlsensoren ermittelt, insbesondere durch Mittelwertbildung der Raddrehzahlsignale von rechtem und linkem Rad.

Die druckmittelbetätigte Bremseinrichtung kann eine hydraulische, elektro-hydraulische, pneumatische, pneumatisch-hydraulische oder elektro-pneumatische Bremseinrichtung sein.

Unter einer elektro-pneumatischen Bremseinrichtung ist eine Bremseinrichtung zu verstehen, bei welcher ein Bremswertgeber elektrische Signale für elektro-pneumatische Druckregelmoduln oder Modulatoren erzeugt, welche abhängig von diesen elektrischen Signalen aus einem pneumatischen Vorratsdruck einen Bremsdruck für pneumatische Bremszylinder erzeugen. Im Falle eines elektronisch geregelten Bremssystems (EBS) wird zudem der erzeugte Bremsdruck von Drucksensoren mit einem durch den Bremswertgeber vorgegebenen Soll-Bremsdruck verglichen und eine eventuelle Regeldifferenz ausgeglichen. Dieser Bremsdruckregelung ist dann die radweise Bremsschlupfregelung an der Hinterachse unterlagert.

Zur seitenweisen und radindividuellen Bremsschlupfregelung an den Radbremsen der wenigstens einen Hinterachse ist beispielsweise je Seite ein ABS-Druckregelventil oder ein Druckregelmodul vorgesehen.

Weiterhin ist bevorzugt wenigstens einem Rad der Hinterachse und wenigstens einem Rad der Vorderachse jeweils wenigstens ein Radgeschwindigkeitssensor zugeordnet, welcher der jeweiligen Radgeschwindigkeit entsprechende Signale an ein elektronisches Steuergerät aussteuert, welches ausgebildet ist, dass es auf der Basis der Referenzgeschwindigkeit des Fahrzeugs den Ist-Bremsschlupf wenigstens an den mit Radgeschwindigkeitssensoren versehenen Rädern ermittelt und dann den Bremsschlupf wenigstens der mit Radbremsen versehenen Räder abhängig von einer Abweichung des ermittelten Ist-Bremsschlupfs von einem optimalen Soll-Bremsschlupf einregelt.

Eine solche Konfiguration mit seitenweisen Bremskreisen mit einem Modulator (M) je Seite und Raddrehzahlsensoren (S) an jeweils zwei Rädern der Hinterachse und der Vorderachse bildet dann eine sog. 4S/2M-Konfiguration. Denkbar ist jedoch auch eine 2S/2M- oder eine 3S/2M-Konfiguration.

Genaueres geht aus der folgenden Beschreibung eines Ausführungsbeispiels hervor.

### Zeichnung

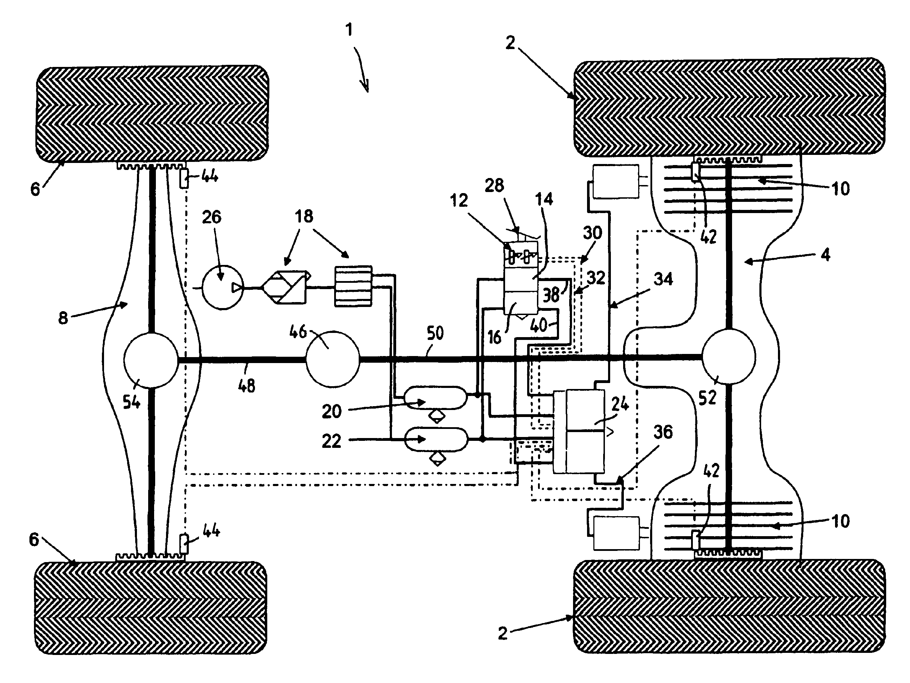

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Schaltplan einer schlupfgeregelten Bremseinrichtung eines Fahrzeugs gemäß einer bevorzugten Ausführungsform der Erfindung.

### Beschreibung des Ausführungsbeispiels

Die in der Figur schematisch gezeigte druckmittelbetätigte, bevorzugt elektro-pneumatische Bremseinrichtung 1 dient zum bremsschlupfgeregetten Bremsen beispielsweise eines landwirtschaftlichen Nutzfahrzeugs wie einem Traktor oder Ackerschlepper.

Anstatt elektro-pneumatisch kann die Bremseinrichtung 1 selbstverständlich auch elektro-hydraulisch oder rein pneumatisch oder rein hydraulisch oder auch pneumatisch-hydraulisch ausgeführt sein, mit der Einschränkung, dass neben den pneumatischen und/oder hydraulischen Komponenten einer solchen pneumatischen, hydraulischen oder pneumatisch-hydraulischen Bremseinrichtung 1 auch elektrische bzw. elektronische ABS-Komponenten vorhanden sein müssen, um eine Bremsschlupfregelung realisieren zu können.

Das Nutzfahrzeug hat eine hier nicht gezeigte Antriebsmaschine, beispielsweise in Form einer Brennkraftmaschine, welche die Hinterräder 2 beispielsweise einer Hinterachse 4 antreibt, wobei die Hinterräder 2 mit den Vorderrädern 6 einer Vorderachse 8 zur Übertragung von Antriebs- und Bremsleistung wahlweise koppelbar oder von diesen entkoppelbar sind. Alternativ kann die Kopplung zwischen den Hinterrädern 2 und den Vorderrädern 6 auch automatisch erfolgen und durch einen Bremsvorgang ausgelöst werden.

Die Kopplung bzw. Entkopplung kann beispielsweise mittels einer hydraulischen Allradkupplung 46 erfolgen, welche beispielsweise von einem Magnetventil in Abhängigkeit von der Betätigung eines Bremswertgebers 12 angesteuert wird, um einen Druckmittelfluß zu oder von der hydraulischen Allradkupplung 46 zu steuern.

Die Allradkupplung 46 koppelt dann beispielsweise im Bremsfall automatisch eine Gelenkwelle 48, insbesondere eine Kardanwelle an eine von einer Antriebsmaschine treibbare Antriebswelle 50 an, die in ein Hinterachsdifferenzial 52 der gebremsten Hinterachse 4 mündet. Die Gelenkwelle 48 ist dann mit den Vorderrädern 6 über ein Vorderachsdifferenzial 54 gekoppelt. Alternativ können die entkoppelten Vorderräder 6 auch über eine vom Fahrer bedienbare Schaltkupplung mit den Hinterrädern 2 gekoppelt werden.

Mit anderen Worten sind dann beispielsweise in Fahrzuständen abweichend vom Bremsen die Vorderräder 6 von den Hinterrädern 2 entkoppelt und nur beim Bremsen, d.h. durch Einleitung eines Bremsvorgangs die Vorderräder 6 mit den Hinterrädern 2 gekoppelt. Daraus wird dann eine sog. Allradbremsung an allen Rädern 2, 4 des Fahrzeugs verwirklicht.

Gemäß einer Alternative könnten die radbremslosen Vorderräder 6 durch Kopplung mit den angetriebenen und gebremsten Hinterrädern 2 einerseits wenigstens zeitweise angetrieben und andererseits aber auch mitgebremst werden, wenn die Hinterräder 4 abgebremst werden. Anstatt nur einer Hinterachse 4 können auch mehrere, beispielsweise zwei Hinterachsen vorhanden sein.

Die Bremseinrichtung 1 weist hier Radbremsen 10 an lediglich der Hinterachse 4 auf, d.h. an der Vorderachse 8 sind keine Radbremsen vorhanden. Die Vorräder 6 werden jedoch zusammen mit den mit Radbremsen 10 versehenen Hinterrädern 2 abgebremst, wenn die Vorderräder 6 mit den Hinterrädern 2 über den geschlossenen Antriebs- bzw. Bremsstrang, d.h. über die Allradkupplung und die Gelenkwelle miteinander gekoppelt sind. Dann bewirkt ein Abbremsen der Hinterräder 2, dass auch an den Vorderrädern 6 Bremskräfte erzeugt werden.

Die Bremseinrichtung 1 ist bremsschlupfgeregelt und beinhaltet daher ein Antiblockiersystem (ABS), welches den Bremsschlupf an den Radbremsen 10 der Hinterachse 4 auf einen optimalen Bremsschlupf einregelt.

Die Bremseinrichtung 1 ist zweikreisig ausgebildet, mit seitenweisen Bremskreisen an der Hinterachse. Zweikreisig bedeutet hier, dass für jeden Bremskreis jeweils ein eigener Kanal eines Bremswertgebers 12, insbesondere für jede Seite - rechts, links - , ein von einer Luftaufbereitungseinrichtung 18 versorgter Druckluftvorrat 20, 22 sowie ein zugeordnetes 1-Kanal-Druckregelmodul vorhanden ist. Seitenweise Bremskreise im Zusammenhang mit der Hinterachse 4 bedeutet, dass für das Hinterrad 2 der linken Seite bzw. das Hinterrad 2 der rechten Seite jeweils ein separater Bremskreis mit den genannten Komponenten vorhanden ist.

Die beiden 1-Kanal-Druckregelmodule für die linke Seite bzw. für die rechte Seite können in einem einzigen 2-Kanal-Druckregelmodul 24 zusammengefasst sein, wie aus der Figur hervorgeht. Folglich ist je einer Seite der Hinterachse 4 - rechte Seite bzw. linke Seite - ein Bremskreis der Bremseinrichtung 1 zugeordnet. Die Luftaufbereitungseinrichtung 18 wird von einem Kompressor 26 mit Druckluft versorgt.

Dann werden bei der hier bevorzugt verwendeten elektro-pneumatischen Betriebsbremseinrichtung 1 von dem Bremswertgeber 12 abhängig vom Betätigungsgrad eines Fußbremspedals 28 in einem Kanal für die rechte Seite und in einem Kanal für die linke Seite jeweils einen Soll-Bremsdruck repräsentierende, elektrische Signale erzeugt. Diese elektrischen Signale werden je Bremskreis über getrennte Signalleitungen 30, 32 in ein hier nicht explizit gezeigtes elektronisches Steuergerät des 2-Kanal-Druckregelmoduls 24 eingesteuert, welches daraufhin für jeden Bremskreis getrennt, je einen Bremsdruck für die Radbremse 10 der linken Seite und für die Radbremse 10 der rechten Seite erzeugt, insbesondere über elektromagnetgesteuerte Einlass- und Auslassventile, die je Kanal oder Bremskreis ein zugeordnetes Relaisventil mit einem pneumatischen Steuerdruck ansteuern, welches dann aus dem pneumatischen Steuerdruck einen Bremsdruck moduliert.

Als pneumatische Rückfallebene erzeugt der Bremswertgeber 12 parallel zu den elektrischen Signalen abhängig vom Betätigungsgrad des Fußbremspedals 28 auch pneumatische Steuersignale für jeden Bremskreis in einem pneumatischen Kanal 14 für die rechte Seite und in einem pneumatischen Kanal 16 für die linke Seite erzeugt und über pneumatische Leitungen 38, 40 in das 2-Kanal-Druckregelmodul eingesteuert, um bei einem Ausfall der Elektrik das Druckregelmodul 24 pneumatisch zu steuern.

Die Radbremsen 10 der Hinterachse 4 werden bevorzugt durch pneumatische Betriebsbremszylinder gebildet, welche belüftet die Bremse zuspannen und entlüftet die Bremse lösen. Zum Be- und Entlüften der Radbremszylinder 10 erstrecken sich daher Bremsdruckleitungen 34, 36 von dem jeweiligen Kanal des 2-Kanal-Druckregelmoduls 24 zu dem zugeordneten Radbremszylinder 10 der Hinterachse 4.

Anstatt ein elektrisch-pneumatisch gesteuertes 2-Kanal-Druckregelmodul 24 könnte auch ein rein pneumatisch gesteuertes 2-Kanal-Druckregelmodul in der Bremseinrichtung 1 verbaut sein. In diesem Fall erzeugt der Bremswertgeber, insbesondere ein 2-kanaliges bzw. 2-kreisiges Fußbremsventil 12 auf der Basis von Vorratsdruckluft des dem jeweiligen Kanal bzw. Bremskreis zugeordneten Druckluftvorrats 20, 22 und abhängig vom Betätigungsgrad des Fußpedals 28 lediglich einen pneumatischen Steuer- oder Eingangsdruck für den betreffenden Kanal des 2-Kanal-Druckregelmoduls 24, welches daraufhin für die beiden Kanäle bzw. Bremskreise je einen Bremsdruck für die Radbremszylinder 10 aussteuert.

Bei dem vorliegenden elektronisch geregelten Bremssystem (EBS) werden zudem die vom 2-Kanal-Druckregelmodul 24 erzeugten Bremsdrücke von integrierten Drucksensoren mit dem durch den Bremswertgeber 12 elektrisch oder pneumatisch vorgegebenen Soll-Bremsdruck verglichen und eventuelle Regeldifferenzen ausgeglichen. Einer solchen Bremsdruckregelung ist dann die radweise Bremsschlupfregelung an den Radbremsen 10 der Hinterachse 4 unterlagert.

Dementsprechend umfasst das 2-Kanal-Druckregelmodul 24 zur seitenweisen und radindividuellen Brernsschlupfregelung an den Radbremsen 10 der Hinterachse 4 entsprechende Steuer- oder Regelroutinen in seinem Steuergerät. Anstatt in einem Druckregelmodul 24 können die zur Druckregelung notwenigen Komponenten wie Magnetventile, Relaisventile, elektronisches Steuergerät und Drucksensoren im Sinne einer aufgelösten Struktur auch einzeln und getrennt voneinander angeordnet und dann durch entsprechende Leitungen miteinander verbunden sein.

Den Hinterrädern 2 und den Vorderrädern 6 ist jeweils ein Radgeschwindigkeitssensor 42, 44 zugeordnet, welcher der jeweiligen Radgeschwindigkeit entsprechende Signale über elektrische Signalleitungen an das elektronische Steuergerät des hier bevorzugt eingesetzten 2-Kanal-Druckregelmoduls 24 aussteuert.

Das Steuergerät des 2-Kanal-Druckregelmoduls 24 ist ausgebildet, dass es auf der Basis einer Referenzgeschwindigkeit des Fahrzeugs den Ist-Bremsschlupf an den mit Radgeschwindigkeitssensoren 42, 44 versehenen Rädern 2, 6 ermittelt und dann den Bremsschlupf an diesen Rädern 2, 6 abhängig von einer Abweichung des ermittelten Ist-Bremsschlupfs von einem Soll-Bremsschlupf einregelt. Eine solche Konfiguration mit seitenweisen Bremskreisen mit einem 1-Kanal-Druckregelmodul je Seite und Raddrehzahlsensoren 42, 44 an den Rädern 2 der Hinterachse 4 und an denen der Vorderachse 6 bildet dann eine sog. 4S/2M-Konfiguration. Alternativ ist auch eine 2S/2M- bzw. eine 3S/2M-Konfiguration möglich, mit zwei bzw. drei Raddrehzahlsensoren 42, 44 und jeweils zwei Modulatoren (ein Modulator je Seite).

Zur Ermittlung der Referenzgeschwindigkeit des Fahrzeugs im Rahmen der Bremsschlupfregelung (ABS) werden dann zusätzlich zu den Signalen der beiden oder drei Raddrehzahlsensoren 42, 44 Signale wenigstens eines weiteren Sensors herangezogen wie beispielsweise eines Beschleunigungssensors oder eines im Getriebe angeordneten Sensors, welcher die Drehzahl einer Abtriebswelle misst. Denkbar sind auch externe Signale von GPS (Global Positioning Systems) sowie Radarsystemen.

Typischerweise wird der Bremsdruck durch die in das Steuergerät des 2-Kanal-Druckregelmoduls 24 integrierten Routinen der ABS- oder Bremsschlupfregelung in einer Anzahl von Zyklen gesteuert bzw. geregelt, von denen jeder Zyklus eine Druckverringerungsphase, eine Druckhaltephase und eine Druckerhöhungsphase umfasst. Durch die Signale der Raddrehzahlsensoren 42, 44 erkennt dann das Steuergerät, ob sich die Räder 2 der Hinterachse 4 bzw. die Räder 6 der Vorderachse 8 in einem unzulässigen Bremsschlupf befinden und steuert dem durch Auslösen der oben beschriebenen Zyklen entgegen.

Die Bremseinrichtung 1 des Fahrzeugs wird im einzelnen dabei durch folgendes Verfahren bremsschlupfgeregelt:

Falls die Vorderräder 6 von den Hinterrädern 2 entkoppelt sind, dann wird der Bremsschlupf an den Radbremsen 10 der Hinterachse 4 seitenweise individuell geregelt. Aufgrund der Entkopplung der nicht separat gebremsten Vorderräder 6 von den Hinterrädern 2 sind die Vorderräder 6 dann ungebremst.

Falls die Vorderräder 6 jedoch mit den Hinterrädern 2 gekoppelt sind, sind zwei Fälle denkbar.

Falls einerseits an wenigstens einem Vorderrad 6 kein von einem zugelassenen Bremsschlupf oder von einem zugelassenen Bremsschlupfbereich abweichender Bremsschlupf detektiert wird, wird der Bremsschlupf an den Radbremsen 10 der Hinterachse 2 seitenweise individuell geregelt. In diesem Fall wird die Referenzgeschwindigkeit des Fahrzeugs durch die Signale der den Vorderrädern 6 zugeordneten Raddrehzahlsensoren 44 ermittelt, insbesondere durch Mittelwertbildung der Raddrehzahlsignale von rechtem und linkem Rad 6.

Falls jedoch andererseits an allen Vorderrädern 6 ein von einem zugelassenen Bremsschlupf oder von einem zugelassenen Bremsschlupfbereich abweichender Bremsschlupf detektiert wird, so wird der Bremsschlupf an wenigstens einem Rad 2 der Hinterachse 4 so geregelt, dass wenigstens ein Vorderrad 6 mit dem zugelassenen Bremsschlupf oder mit einem Bremsschlupf innerhalb des zugelassenen Bremsschlupfbereichs gebremst wird. Eine ABS- oder bremsschlupfgeregelte Bremsung des wenigstens einen Vorderrades 6 wird dann über die automatische oder wahlweise Koppelung mit dem wenigstens einen bremsschlupfgeregelten Hinterrad 2 bewerkstelligt.

Auf diese Weise kann auch ein Fahrzeug mit Radbremsen 10 lediglich an der Hinterachse 4 mit einer ABS-Regelung betrieben werden, welche auch auf die Vorderräder 6 wirkt. Selbstverständlich kann die Bremsschlupfregelung anstatt durch ein 2-Kanal-Druckregelmodul 24 auch durch andere Steuerventile wie beispielsweise ABS-Drucksteuerventile für jedes Rad 2 bzw. für jede Seite der Hinterachse 4 realisiert werden.

### Bezugszeichenliste

| | |
|---|---|
| 1 | Bremseinrichtung |
| 2 | Hinterräder |
| 4 | Hinterachse |
| 6 | Vorderräder |
| 8 | Vorderachse |
| 10 | Radbremsen |
| 12 | Bremswertgeber |
| 14 | Kanal |
| 16 | Kanal |
| 18 | Luftaufbereitungseinrichtung |
| 20 | Druckluftvorrat |
| 22 | Druckluftvorrat |
| 24 | 2-Kanal-Druckregelmodul |
| 26 | Kompressor |
| 28 | Fußbremspedal |
| 30 | Signalleitung |
| 32 | Signalleitung |
| 34 | Bremsdruckleitung |
| 36 | Bremsdruckleitung |
| 38 | pneumatische Leitung |
| 40 | pneumatische Leitung |
| 42 | Radgeschwindigkeitssensor |
| 44 | Radgeschwindigkeitssensor |
| 46 | Allradkupplung |
| 48 | Gelenkwelle |
| 50 | Antriebswelle |
| 52 | Hinterachsdifferenzial |
| 54 | Vorderachsdifferenzial |

## Patentansprüche

1. Verfahren zur Steuerung eines Fahrzeugs mit einer druckmittelbetätigten Bremseinrichtung (1), welche Radbremsen (10) und seitenweise Bremskreise an lediglich wenigstens einer Hinterachse (4) umfasst, sowie mit einer Antriebsmaschine, welche die Hinterräder (2) der wenigstens einen Hinterachse (4) antreibt, wobei die Hinterräder (2) zur Übertragung von Antriebs- und/oder Bremsleistung mit Vorderrädern (6) einer Vorderachse (8) wahlweise oder automatisch koppelbar oder von diesen entkoppelbar sind, **dadurch gekennzeichnet, dass** die Bremseinrichtung (1) bremsschlupfgeregelt wird, wobei
a) falls die Vorderräder (6) von den Hinterrädern (2) entkoppelt sind, der Bremsschlupf an den Radbremsen (10) der Hinterachse (4) seitenweise individuell geregelt wird,
b) falls die Vorderräder (6) mit den Hinterrädern gekoppelt sind und
α) falls an wenigstens einem Vorderrad (6) kein von einem zugelassenen Bremsschlupf oder von einem zugelassenen Bremsschlupfbereich abweichender Bremsschlupf detektiert wird, der Bremsschlupf an den Radbremsen (10) der Hinterachse (4) seitenweise individuell geregelt wird, oder
β) falls an allen Vorderrädern (6) ein von einem zugelassenen Bremsschlupf oder von einem zugelassenen Bremsschlupfbereich abweichender Bremsschlupf detektiert wird, der Bremsschlupf an wenigstens einem Rad (10) der Hinterachse (4) so geregelt wird, dass wenigstens ein Vorderrad (6) mit dem zugelassenen Bremsschlupf oder mit einem Bremsschlupf innerhalb des zugelassenen Bremsschlupfbereichs gebremst wird.

2. Verfahren nach Anspruch 1, **dadurch gekennzeichnet, dass** im Fall a) die Referenzgeschwindigkeit des Fahrzeugs durch die Signale von den Vorderrädern (6) zugeordneten Raddrehzahlsensoren (44) ermittelt wird, insbesondere durch Mittelwertbildung der Raddrehzahlsignale von rechtem und linkem Rad (6).

3. Fahrzeug mit einer druckmittel betätigten Bremseinrichtung, welche Radbremsen (10) und seitenweise Bremskreise an lediglich wenigstens einer Hinterachse (4) umfasst, sowie mit einer Antriebsmaschine, welche die Hinterräder (2) der wenigstens einen Hinterachse (4) antreibt, wobei die Hinterräder (2) zur Übertragung von Antriebs- und/oder Bremsleistung mit Vorderrädern (6) einer Vorderachse (8) wahlweise oder automatisch koppelbar oder von diesen entkoppelbar sind, **dadurch gekennzeichnet, dass** die Bremseinrichtung derart bremsschlupfgeregelt ist, dass
a) falls die Vorderräder (6) von den Hinterrädern (2) entkoppelt sind, der Bremsschlupf an den Radbremsen (10) der Hinterachse (4) seitenweise individuell geregelt wird,
b) falls die Vorderräder (6) mit den Hinterrädern (2) gekoppelt sind und
α) falls an wenigstens einem Vorderrad (6) kein von einem zugelassenen Bremsschlupf oder von einem zugelassenen Bremsschlupfbereich abweichender Bremsschlupf detektiert wird, der Bremsschlupf an den Radbremsen (10) der Hinterachse (4) seitenweise individuell geregelt wird, oder
β) falls an allen Vorderrädern (6) ein von einem zugelassenen Bremsschlupf oder von einem zugelassenen Bremsschlupfbereich abweichender Bremsschlupf detektiert wird, der Bremsschlupf an wenigstens einem Rad (10) der Hinterachse (4) so geregelt wird, dass wenigstens ein Vorderrad (6) mit dem zugelassenen Bremsschlupf oder mit einem Bremsschlupf innerhalb des zugelassenen Bremsschlupfbereichs gebremst wird.

4. Fahrzeug nach Anspruch 3, **dadurch gekennzeichnet, dass** die Bremseinrichtung eine hydraulische, elektro-hydraulische, pneumatische, pneumatisch-hydraulische oder elektro-pneumatische Bremseinrichtung (1) ist.

5. Fahrzeug nach Anspruch 4, **dadurch gekennzeichnet, dass** zur seitenweisen und radindividuellen Bremsschlupfregelung an den Radbremsen (10) der wenigstens einen Hinterachse (4) je Seite ein ABS-Druckregelventil oder ein Druckregelmodul (24) vorgesehen ist.

6. Fahrzeug nach Anspruch 5, **dadurch gekennzeichnet, dass** wenigstens einem Rad (2) der wenigstens einen Hinterachse (4) und wenigstens einem Rad (6) der Vorderachse (8) jeweils wenigstens ein Radgeschwindigkeitssensor (42, 44) zugeordnet ist, welcher der jeweiligen Radgeschwindigkeit entsprechende Signale an ein elektronisches Steuergerät aussteuert, welches ausgebildet ist, dass es auf der Basis einer Referenzgeschwindigkeit des Fahrzeugs den Ist-Bremsschlupf wenigstens an den mit Radgeschwindigkeitssensoren (42, 44) versehenen Rädern (2, 6) ermittelt und dann den Bremsschlupf wenigstens der mit Radbremsen (10) versehenen Räder (2) abhängig von einer Abweichung des ermittelten Ist-Bremsschlupfs von einem Soll-Bremsschlupf einregelt.

7. Fahrzeug nach Anspruch 5 und 6, **dadurch gekennzeichnet, dass** die Bremseinrichtung eine 2S/2M-, 3S/2M- oder eine 4S/2M-Konfiguration aufweist.

8. Fahrzeug nach einem der Ansprüche 3 bis 7, **dadurch gekennzeichnet, dass** die Koppelung der Vorderräder (6) mit den Hinterrädern (2) mittels einer Allradkupplung (46) erfolgt, welche abhängig vom Betätigungsrad eines Bremswertgebers (12) angesteuert ist.

## Claims

1. Method of controlling a vehicle including a braking means (1) operated by a compressed medium, which comprises wheel brakes (10) and sidewise braking circuits on at least one rear axle (4), as well as one driving engine that drives the rear wheels (2) of said at least one rear axle (4), with the rear wheels (2) being adapted to be coupled to or decoupled from front wheels (6) of a front axle (8) at option or automatically for the transmission of driving and/or braking power, **characterised in that** said braking means (1) is adjusted by brake slip, wherein
(a) if said front wheels (6) are decoupled from said rear wheels (2) the brake slip on the wheel brakes (10) of said rear axle (4) is individually adjusted sidewise,
(b) if said front wheels (6) are coupled to said rear wheels and
(α) if no brake slip is detected on at least one front wheel (6), which varies from an admissible brake slip or from an admissible brake slip range, the brake slip on the wheel brakes (10) of said rear axle (4) is individually adjusted sidewise, or
(β) if a brake slip is detected on all front wheels (6), which varies from an admissible brake slip or from an admissible brake slip range, the brake slip on at least one wheel (10) of said rear axle (4) is so adjusted that braking is performed at least on one front wheel (6) with the admissible brake slip or with a brake slip within the admissible brake slip range.

2. Method according to Claim 1, **characterised in that** in the case (1) the reference speed of the vehicle is detected by the signals from wheel speed sensors (44) associated with the front wheels (6), in particular by averaging the wheel speed signals from the right wheel and the left wheel (6).

3. Vehicle including a braking means operated by a compressed medium, which comprises wheel brakes (10) and sidewise braking circuits on at least one rear axle (4), as well as one driving engine that drives the rear wheels (2) of said at least one rear axle (4), with the rear wheels (2) being adapted to be coupled to or decoupled from front wheels (6) of a front axle (8) at option or automatically for the transmission of driving and/or braking power, **characterised in that** said braking means (1) is adjusted by brake slip in such a manner that
(a) if said front wheels (6) are decoupled from said rear wheels (2) the brake slip on the wheel brakes (10) of said rear axle (4) is individually adjusted sidewise,
(b) if said front wheels (6) are coupled to said rear wheels and
(α) if no brake slip is detected on at least one front wheel (6), which varies from an admissible brake slip or from an admissible brake slip range, the brake slip on the wheel brakes (10) of said rear axle (4) is individually adjusted sidewise, or
(β) if a brake slip is detected on all front wheels (6), which varies from an admissible brake slip or from an admissible brake slip range, the brake slip on at least one wheel (10) of said rear axle (4) is so adjusted that braking is performed at least on one front wheel (6) with the admissible brake slip or with a brake slip within the admissible brake slip range.

4. Vehicle according to Claim 3, **characterised in that** said braking means is a hydraulic, electro-hydraulic, pneumatic, pneumatic-hydraulic or electropneumatic braking means (1).

5. Vehicle according to Claim 4, **characterised in that** per side an ABS pressure regulator valve or a pressure regulator module (24) is provided for sidewise brake slip adjustment individualized per wheel on the wheel brakes (10) of said at least one rear axle (4).

6. Vehicle according to Claim 5, **characterised in that** at least one respective wheel speed sensor (42, 44) is associated with at least one wheel (2) of said at least one rear axle (4) and with at least one wheel (6) of said front axle (8), which sensor controls signals corresponding to the speed of the respective wheel to an electronic controller that is so configured that it determines the actual brake slip at least on the wheels (2, 6) provided with wheel speed sensors (42, 44) on the basis of a reference speed of the vehicle, and then adjusts the brake slip on at least those wheels (2) which are provided with wheel brakes (10), in dependence on a variation of the determined actual brake slip from a rated brake slip.

7. Vehicle according to Claims 5 and 6, **characterised in that** said braking means presents a 2S/2M, 3S/2M or a 4S/2M configuration.

8. Vehicle according to any of the Claims 3 to 7, **characterised in that** said front wheels (6) are coupled to said rear wheels (2) by means of a four-wheel clutch (46) that is controlled as a function of the degree of operation of a braking value generator (12).

## Revendications

1. Procédé à commander un véhicule, qui comprend un moyen de freinage (1) commandé par un milieu sous pression, qui comprend des freins de roue (10) et des circuits de freinage par côté à au moins un essieu arrière (4), ainsi qu'un one moteur d'entraînement, qui entraine les roues arrières (2) dudit au moins un essieu arrière (4), auxdites roues arrières (2) étant aptes à être accouplé à ou découplé des roues avant (6) d'un essieu avant (8) à volonté ou de manière automatique pour la transmission de puissance d'entraînement et/ou de freinage, **caractérisé en ce que** ledit moyen de freinage (1) est ajusté par glissement de frein, dans lequel
(a) pourvu que lesdites roues avant (6) sont découplées desdites roues arrières (2) le glissement de frein aux freins de roue (10) dudit essieu arrière (4) est ajusté individuellement par côté,
(b) pourvu que lesdites roues avant (6) sont accouplées auxdites roures arrières et
(α) si du glissement de frein n'est pas détecté à au moins une roue avant (6), qui est en variance d'un glissement de frein admissibleou d'une gamme admissible de glissement de frein, le glissement de frein aux freins de roue (10) dudit essieu arrière (4) est ajusté individuellement par côté, ou
(β) si du glissement de frein est détecté à toutes les roues avant (6), qui est en variance d'un glissement de frein admissible ou d'une gamme admissible de glissement de frein, le glissement de frein à au moins une roue (10) dudit essieu arrière (4) est ajusté d'une telle manière, que le freinage se fasse au moins à une roue avant (6) au glissement de frein admissible ou à un glissement de frein au-dedans de la gamme admissible de glissement de frein.

2. Procédé selon la revendication 1, **caractérisé en ce qu'**au cas (1) la vitesse de référence du véhicule est détectée par les signaux à partir des capteurs de vitesse de roue (44) affectés aux roues avant (6), en particulier par l'établissement de la moyenne des signaux de vitesse de roué, qui viennt de la roué de droit et la roué de gauche (6).

3. Véhicule comprenant un moyen de freinage commandé par un milieu sous pression, qui comprend des freins de roue (10) et des circuits de freinage par côté à au moins un essieu arrière (4), ainsi qu'un moteur d'entraînement, qui entraîne les roues arriéres (2) dudit au moins un essieu arrière (4), auxdites roues arriéres (2) étant aptes à être accouplé à ou découplé des roues avant (6) d'un essieu avant (8) à volonté ou de manière automatique pour la transmission de puissance d'entraînement et/ou de freinage, **caractérisé en ce que** ledit moyen de freinage (1) est ajusté par glissement de frein d'une telle manière, que
(a) pourvu que lesdites roues avant (6) sont découplées desdites roues arrières (2), le glissement de frein aux freins de roue (10) dudit essieu arrière (4) soit ajusté individuellement par côté,
(b) pourvu que lesdites roues avant (6) sont accouplées auxdites roues arrières et
(α) si du glissement de frein n'est pas détecté à au moins une roue avant (6), qui est en variance d'un glissement de frein admissible ou d'une gamme admissible de glissement de frein, le glissement de frein aux freins de roue (10) dudit essieu arrière (4) soit ajusté individuellement par côté, ou
(β) si du glissement de frein est détecté à toutes les roues avant (6), qui est en variance d'un glissement de frein admissible ou d'une gamme admissible de glissement de frein, le glissement de frein à au moins une roue (10) dudit essieu arrière (4) soit ajusté d'une telle manière, que le freinage se fasse au moins à une roue avant (6) au glissement de frein admissible ou à un glissement de frein au-dedans de la gamme admissible de glissement de frein.

4. Véhicule selon la revendication 3, **caractérisé en ce que** ledit moyen de freinage est un moyen de freinage (1) hydraulique, électro-hydraulique, pneumatique, pneumatique-hydraulique or électropneumatique.

5. Véhicule selon la revendication 4, **caractérisé en ce qu'**une vanne de régulation de pression ABS par côté ou un module de régulation de pression (24) est disposé pour l'ajustement de glissement de frein par côté, individualise par roué, aux freins de roue (10) dudit au moins un essieu arrière (4).

6. Véhicule selon la revendication 5, **caractérisé en ce qu'**au moins un capteur de vitesse de roué respectif (42, 44) est affecté à au moins une roue (2) dudit au moins un essieu arrière (4) et à au moins une roué (6) dudit essieu avant (8), ce capteur commandant des signaux, qui correspondent à la vitesse de la roué respective, à une unité de commande électronique, qui est configurée de façon, qu'elle établit le glissement de frein réel au moins aux roués (2, 6) pourvues des capteurs de vitesse de roue (42, 44), à la base d'une vitesse de référence du véhicule, et ajuste ensuite le glissement de frein au moins aux roues (2), qui sont pourvues des freins de roue (10), en fonction d'une variance du glissement de frein réel d'un glissement de frein de consigne.

7. Véhicule selon les revendications 5 et 6, **caractérisé en ce que** ledit moyen de freinage a une configuration 2S/2M, 3S/2M or a 4S/2M.

8. Véhicule selon une quelconque des revendications 3 à 7, **caractérisé en ce que** lesdites roués avant (6) sont accouplées auxdites roués arrières (23) au moyen d'un embrayage de à quatre roues (46), qui est commandé en fonction du degré de commande d'un générateur de valeurs de freinage (12).
